# EUROPÄISCHE PATENTSCHRIFT

(11) **EP 0 649 881 B1**
(45) Veröffentlichungstag und Bekanntmachung des Hinweises auf die Patenterteilung: **05.01.2000**
(21) Anmeldenummer: 94115962.6
(22) Anmeldetag: 10.10.1994
(51) Int. Cl.: C09B 47/24, C09D 11/02, D06P 1/14

(54) **Neue Kupferphthalocyanin-Farbstoffe und deren Verwendung**
Novel copper phtalocyanines and their use
Phtalocyanines de cuivre nouvelles et leur utilisation

(30) Priorität: 21.10.1993 DE 4335958
(43) Veröffentlichungstag der Anmeldung: 26.04.1995
(73) Patentinhaber: BAYER AG, 51368 Leverkusen (DE)
(72) Erfinder: Wunderlich, Klaus, Dr., D-51373 Leverkusen (DE)

(56) Entgegenhaltungen:
- EP-A- 0 211 323
- DE-A- 1 946 504
- DE-B- 1 083 460
- PATENT ABSTRACTS OF JAPAN, unexamined applications, C Field, Band 13, Nr. 487, 6. November 1989 THE PATENT OFFICE JAPANESE GOVERNMENT Seite 54 C 649; & JP-A-01 190 770 (RICOH)

## Beschreibung

Die vorliegende Erfindung betrifft neue Kupferphthalocyanin-Farbstoffe, flüssige Formierungen dieser Farbstoffe sowie Verfahren zum Färben und Bedrucken cellulosehaltiger Materialien.

Gegenstand der Erfindung sind Kupferphthalocyanin-Farbstoffe, die in Form der freien Säure der allgemeinen Formel I entsprechen, 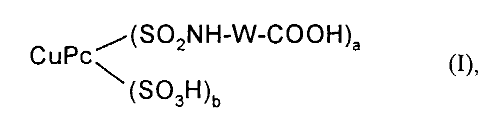 worin
- CuPc: für einen Kupferphthalocyanin-Rest,
- w: für verzweigtes oder geradkettiges C₉₋₁₆-Alkylen,
- a: für 2 bis 4,
- b: für 0 bis 2 steht, und
die Summe von a und b 3 bis 4 beträgt.

Bevorzugt sind Farbstoffe der Formel (I),
worin
- w: für verzweigtes oder geradkettiges C₁₀₋₁₂-Alkylen,
- a: für 3 bis 4,
- b: für 0 bis 1 steht, und
die Summe von a und b 3 bis 4 beträgt.

Die Herstellung der erfindungsgemäßen Kupferphthalocyanin-Farbstoffe (I) kann in üblicher, an sich bekannter Weise durch Kondensation von Kupferphthalocyanin-sulfochloriden oder -sulfochlorid-sulfonsäuren mit 2 bis 4 Mol einer Aminoalkancarbonsäure der allgemeinen Formel (II)

H₂N- W -COOH (II),

worin
- W: die oben angegebene allgemeine und bevorzugte Bedeutung hat,
und gegebenenfalls anschließender Verseifung überschüssiger Sulfochlorid-Gruppen erfolgen. Aus der erhaltenen Rohfarbstofflöung oder Suspension kann der erfindungsgemäße Farbstoff durch übliche Methoden wie z.B. Aussalzen und Filtrieren isoliert werden. In den meisten Fällen ist eine Zwischenisolierung jedoch nicht erforderlich, um zu den erfindungsgemäßen flüssigen Farbstoff-Formierungen zu gelangen.

Beispiele für Aminoalkancarbonsäuren der allgemeinen Formel (II) sind 10-Aminodecansäure, 11-Aminoundecansäure, 3-Aminoundecansäure, 2-Aminododecansäure (2-Aminolaurinsäure), 12-Aminododecansäure (12-Aminolaurinsäure) oder 16-Aminohexadecansäure.

Ein weiterer Gegenstand der Erfindung sind flüssige Formierungen enthaltend mindestens einen erfindungsgemäßen Farbstoff der Formel (I).

Vorzugsweise handelt es sich bei den erfindungsgemäßen Farbstoff-Formierungen um wäßrige Lösungen mit einem Gehalt an Farbstoff der Formel (I) von 0,1 bis 20 Gew.- % und einem pH-Wert von 7 bis 13.

Die erfindungsgemäßen Farbstoff-Formierungen zeichnen sich durch eine gute Lagerstabilität von beispielsweise 6 Wochen bei - 2°C oder +40°C aus.

Die erfindungsgemäßen Farbstoff-Formierungen können hergestellt werden, indem mindestens ein Farbstoff der Formel (I) in Wasser gegebenenfalls unter Zusatz von anorganischen und/oder organischen Basen gelöst wird. Es ist auch möglich, die bei der Synthese des Farbstoffs anfallende Syntheselösung oder -suspension ohne Zwischenisolierung des Farbstoffs, gegebenenfalls unter Zusatz von anorganischen und/oder organischen Basen und gegebenfalls Wasser, in die erfindungsgemäßen Farbstoff-Formierungen zu überführen. Auf löslichkeitsverbessernde organische Zusätze kann dabei zumeist völlig verzichtet werden.

In manchen Fällen kann es sich als günstig erweisen, wenn die Syntheselösung oder -suspension zuvor durch Anwendung von Membranverfahren wie beispielsweise Ultrafiltration, Mikrofiltration und Reversosmose oder deren Kombination gereinigt und entsalzt wird und anschließend gegebenenfalls durch Zusatz von Basen und/oder Wasser in die erfindungsgemäße Farbstoff-Formierung überführt wird.

Als anorganische bzw. organische Basen seien beispielsweise genannt :

Hydroxide, Carbonate und Hydrogencarbonate von Lithium, Natrium, Kalium, Ammonium wie beispielsweise Lithiumhydroxid, Natriumhydroxid, Kaliumhydroxid, Lithiumcarbonat, Natriumcarbonat, Kaliumcarbonat; organische Amine wie Monoethanol-, Diethanol-, Triethanol, 3-Propanol-, 2-Propanol-, Dipropanol-, Diisopropanol-, Tripropanol-, Triisopropanol-, Diethyl-, Triethyl-, N-Methylethanol-, N-Methyldiethanol-, N-Ethyldiethanol-, N,N-Dimethylethanol-, N,N-Diethylethanol-, N-Phenylethanolamin, 1-Amino-2-propanol, 2-Amino-1-propanol, N-2-Hydroxyethyldiisopropanolamin, Tri s-N,N,N-[2-(2'-hydroxyethoxy)-ethyl]amin oder heterocyclische Amine wie z.B. Morpholin oder Hydroyethylmorpholin, sowie weiterhin Natriummethylat, Lithiumethylat oder Kalium-tert.-butylat.

Vorzugsweise werden für die Einstellung des pH-Wertes der erfindungsgemäßen Farbstoff-Formierungen Alkalihydroxide, verwendet, die bereits synthesebedingt enthalten sein können.

Die erfindungsgemäßen Farbstoffe oder Farbstoff-Formierungen färben cellulosehaltige Materialien, insbesondere Papier, Baumwolle und Viskose mit guten Naß- und Lichtechtheiten. Weiterer Erfindungsgegenstand sind daher Verfahren zum Färben und Bedrucken von cellulosehaltigen Materialien mit den erfindungsgemäßen Farbstoffen oder Farbstoff-Formierungen.

Die Farbstoffe können nach allen in der Papier- und Textilindustrie für substantive Farbstoffe gebräuchlichen Färbeverfahren verwendet werden, insbesondere in der Massen- wie in der Oberflächenfärbung von Papier für geleimte oder ungeleimte Sorten, ausgehend von gebleichtem oder ungebleichtem Zellstoff verschiedener Provenienz wie Nadel- oder Laubholz-sulfit- und/oder -sulfat-Zellstoff. Sie können auch in der Garn- und Stückfärberei von Baumwolle, Viskose und Leinen nach dem Ausziehverfahren aus langer Flotte oder in Kontinueverfahren angewandt werden.

Die Verbindungen der Formel (I) können auch in Form der erfindungsgemäßen Farbstoffpräparationen zum Färben eingesetzt werden. Diese Anwendungsform ist insbesondere beim Färben von Papier bevorzugt.

Gegenstand der Erfindung sind weiterhin Drucktinten enthaltend mindestens einen Farbstoff der Formel (I) sowie Verfahren zur Herstellung der Drucktinten.

Vorzugsweise enthalten die erfindungsgemäßen Drucktinten 0,1 bis 20 Gew.-%, insbesondere 0,5 bis 15 Gew.-% und ganz besonders bevorzugt 0,5 bis 5 Gew.-% Farbstoff der Formel (I), vorzugsweise in Form des Alkali- oder Ammoniumsalzes, gelöst in Wasser und/oder einem oder mehreren organischen Lösungsmitteln. Der pH-Wert der erfindungsgemäßen Drucktinten kann zwischen pH 5 und 13 liegen. Vorzugsweise haben die Drucktinten einen pH-Wert von 7 bis 13.

Die erfindungsgemäßen Drucktinten können übliche Additive wie z.B. Tenside, Fungizide oder Bakterizide in den für diese Additive üblichen Mengen enthalten.

Die erfindungsgemäßen Drucktinten können bis zu 50 Gew.-% organische Lösungsmittel enthalten. Vorzugsweise enthalten sie 0 bis 30 Gew.-%, besondersbevorzugt 2 bis 30 Gew.-%.

Als organische Lösungsmittel kommen insbesondere wasserlösliche organische Lösungsmittel wie z.B. Alkohole, insbesondere C₁-C₄-Alkanole wie Methanol, Ethanol, n-Propanol, Isopropanol, n-Butanol, sek.-Butanol, tert.-Butanol, Isobutanol; Pentandiole; Carbonsäureamide wie z.B. Formamide und Dimethylacetamid; Ketone oder Ketonalkohole wie Aceton und Diacetonalkohole, cylische Ester wie Tetrahydrofuran und Dioxan; stickstoffhaltige Heterocyclen wie 2-Pyrrolidon, N-Methyl-pyrrolid-2-on und 1,3-Dimethyl-imidazolid-2-on; Polyalkylenglykole wie Polyethylenglykol und Polypropylenglykol; Alkylenglykol und Thioglykole mit C₂-C₆-Alkyleneinheiten wie Ethylenglykol, Propylenglykol, Butylenglykol, Triethylenglykol, Thiodiglykol, Hexylenglykol und Diethylenglykol; andere Polyole wie Glycerin und 1,2,6-Hexantriol; Alkylether und Polyalkylether von Alkoholen wie 2-Methoxyethanol, 2-(2-Methoxy-ethoxy)ethanol, 2-(2-Ethoxyethoxy)ethanol, 2-Methoxy-2-ethoxy-2-ethoxyethanol, 2-[2-(2-Methoxyethoxy)ethoxy]ethanol, und 2-[2-(2-Ethoxyethoxy)ethoxy]ethanol sowie Sulfoxide und Sulfone, insbesondere solche mit Molekulargewichten <200 in Frage.

Die erfindungsgemäßen Drucktinten können außer den Farbstoffen der Formel (I) auch noch einen oder mehrere für Drucktinten übliche Farbstoffe enthalten, die beispielsweise zur Nuancierung dienen können.

Besonders geeignete Lösungsmittel sind beispielsweise: Ethylenglykol, Diethylenglykol, Triethylenglykol, 1,5-Pentandiol, Essigsäure-2-hydroxyethylester, Essigsäure-hydoxyethylester, Glycerin, 1,2-Dihydroxypropan, 1-Methoxy-2-propanol, 2-Methoxy-1-propanol, N,N-Dimethylformamid, Pyrrolidon, N-Methylpyrrolidon, ε-Caprolactam, N-Methyl-ε-caprolactam, Tetramethylharnstoff, 1,3-Dimethyl-2-imidazolidinon, N,N'-Dimethylpropylenharnstoff, Dimethylsulfoxid, Dimethylsulfon, Sulfolan, Ethylenglykol, Diethylenglykol, Triethylenglykol, 1,2-Dihydroxypropan, 1-Ethoxy-2-hydroxy-propan, Polyethylenglykole mit Molekulargewichten bis 500, heterocyclische Ketone wie 2-Pyrrolidon, N-Methyl-2-pyrrolidon und 1,3-Dimethylimidazolid-2-on.

Die erfindungsgemäßen Drucktinten können durch Auflösen der Salze der erfindungsgemäßen Farbstoffe (I) in Wasser und/oder einem oder mehreren der obengenannten organischen Lösungsmitteln, gegebenenfalls bei erhöhter Temperatur und. gegebenenfalls unter Zusatz der genannten anorganischen und/oder organischen Basen hergestellt werden. Gegebenenfalls können noch zusätzlich übliche ionische oder nicht-ionische Zusatzstoffe verwendet werden, z. B. solche, mit denen die Viskosität erniedrigt und/oder die Oberflächenspannung erhöht werden können.

Anstelle der Salze von (I) können auch die entsprechenden freien Säuren in Kombination mit mindestens äquimolaren Mengen der entsprechenden Basen eingesetzt werden.

Der zur Herstellung der erfindungsgemäßen Drucktinten verwendete Farbstoff der Formel (I) kann zuvor durch Anwendung von Membranverfahren wie beispielsweise Ultrafiltration, Mikrofiltration, Reversosmose oder deren Kombination gereinigt, entsalzt und gegebenenfalls aufkonzentriert werden. Die bei den angegebenen Membranverfahren anfallenden Lösungen oder Suspensionen können direkt zur Herstellung der erfindungsgemäßen Drucktinten eingesetzt werden. Es ist aber auch möglich, die Lösungen oder Suspensionen zuvor in feste Formulierungen, z.B. durch Sprühtrocknung zu überführen.

Es ist auch möglich, die bei der Synthese des erfindungsgemäßen Farbstoffs anfallende Syntheselösung oder -suspension ohne Zwischenisolierung des Farbstoffs oder die erfindungsgemäßen Farbstoff-Formierungen, gegebenenfalls unter Zusatz von anorganischen und/oder organischen Basen oder anorganischen und/oder organischen Lösungsmitteln und Wasser, in die erfindungsgemäßen Drucktinten zu überführen.

Die Syntheselösung oder -suspension kann gegebenenfalls zuvor durch Anwendung von Membranverfahren wie beispielsweise Ultrafiltration, Mikrofiltration und Reversosmose oder deren Kombination gereinigt und entsalzt werden.

Weiterer Gegenstand der Erfindung ist ein Verfahren zum Bedrucken von Trägermaterialien mittels eines Tintenstrahlaufzeichnungssystems, wobei als Aufzeichnungsflüssigkeit eine erfindungsgemäße Drucktinte eingesetzt wird.

Die erfindungsgemäßen Drucktinten eignen sich zum Bedrucken unterschiedlicher Trägermaterialien, wie z.B. Papier, Holz, Textilien, Kunststoffe oder Metall.

Vorzugsweise werden die erfindungsgemäßen Drucktinten als Aufzeichnungsflüssigkeit für Tintenstrahlaufzeichnungssysteme verwendet. Bei den Tintenstrahlaufzeichnungssystemen handelt es sich z.B. um Inkjet-Drucker wie Thermal Jet, Bubble Jet, Piezo-Inkjet oder Ventil Inkjet. Bevorzugtes Aufzeichnungsmaterial für Inkjet-Drucker ist Papier.

Das Tintenstrahlaufzeichnungsverfahren ist an sich bekannt. Dabei werden Tröpfchen einer Schreibflüssigkeit aus einer oder mehreren kleinen Düsen gezielt auf ein Trägermaterial geschossen. Durch elektronische Aussteuerung werden die einzelnen Tröpfchen zu Schriftzeichen oder graphischen Mustern zusammengefaßt. Dabei ist es erforderlich, daß die Tinte mit dem Trägermaterial, bevorzugt Papier, wechselwirkt. Die Tinte sollte in das Papier eindringen, ohne zuviel auseinanderzulaufen, da sonst die Druckqualität leidet. Die gedruckte Information muß schnell trocknen, sowie wasserfest und wischfest sein. Viele Tinten besitzen einige der geforderten Eigenschaften auf Kosten der anderen Eigenschaften. Besonders die Wasserfestigkeit der Farbstoffe ist meistens unbefriedigend.

Die erfindungsgemäßen Aufzeichnungsflüssigkeiten besitzen folgende Vorteile: Die physikalischen Eigenschaften, wie Viskosität, Oberflächenspannung und dergleichen, liegen in den geeigneten Bereichen; die Aufzeichnungsflüssigkeiten verursachen keine Verstopfungen in den feinen Abgabeöffnungen der Tintenstrahl-Aufzeichnungsvorrichtungen; sie liefern Bilder von hoher Dichte; bei der Lagerung kommt es in den Aufzeichnungsflüssigkeiten nicht zu einer Veränderung von physikalischen Eigenschaften und zur Ablagerung von festen Bestandteilen; die Aufzeichnungsflüssigkeiten eignen sich zur Aufzeichnung auf verschiedenen Aufzeichnungsmedien ohne Beschränkungen hinsichtlich der Art der Aufzeichnungsmedien; schließlich fixieren die Aufzeichnungsflüssigkeiten rasch und ergeben Bilder mit ausgezeichneter Wasserfestigkeit, Lichtechtheit, Abriebbeständigkeit und Auflösung.

Aus der JP-A 01 190 770 sind bereits Aufzeichnungsflüssigkeiten für den Tintenstrahldruck bekanntgeworden, die ähnlich aufgebaute Kupferphthalocyanin-Farbstoffe mit Carboxy-C₀₋₆-alkylsulfamoylgruppen enthalten. Die mit diesen Tinten im Tintenstrahldruck erzielbaren Drucke befriedigen nicht hinsichtlich der Wasserechtheiten. Es war daher überraschend, daß die mit den Farbstoffen I hergestellten Aufzeichnungsflüssigkeiten zu Drucken mit hervorragenden Naßechtheiten führten.

Die folgenden Beispiele sollen die Erfindung erläutern, ohne sie jedoch zu beschränken.

Prozente und Teile beziehen sich, soweit nichts anderes angegeben, jeweils auf das Gewicht.

### Beispiel 1

120,0 Teile Kupferphthalocyanin 96%ig (= 115,2 Teile 100 %ig) werden innerhalb 1 Stunde unter Rühren in 624,7 Teile Chlorsulfonsäure eingetragen. und innerhalb von 1,5 Stunden auf 138°C erwärmt. Nach 8 Stunden Rühren bei 138°C wird auf 85°C abkühlen lassen und während zwei Stunden bei 85°C bis 88°C tropfenweise mit 157,3 Teilen Thionylchlorid versetzt. Anschließend wird auf 90°C bis 92°C erwärmt und 4 Stunden bei dieser Temperatur gerührt. Nach Abkühlung auf 20°C bis 30°C wird die Reaktionsmischung auf eine Mischung 1000 Teile Eis und 1000 Teilen Wasser ausgetragen. Durch laufende Zugabe von 1500 Teilen Eis wird die Temperatur bei -2°C bis 0°C gehalten. Es wird abgesaugt und mit 4000 Teilen Eiswasser (3000 Teile Wasser und 1000 Teile Eis) gewaschen.

Der feuchte Nutschkuchen wird in 750 Teile Wasser und 500 Teile Eis eingerührt und sogleich durch Zugabe von 15 %iger Natronlauge auf einen pH-Wert von 8,0 gebracht. Es werden weitere 200 Teile Eis zugefügt und dann 161 Teile 11-Aminoundecansäure eingetragen. Durch Zutropfen von 15 %iger Natronlauge wird der pH-Wert auf 10,5 eingestellt und während der Umsetzung auf diesem Wert gehalten. Die Temperatur wird innerhalb von 4 Stunden von 0°C auf 20°C ansteigen gelassen. Nach 2 Stunden Rühren bei 20°C bis 25°C wird innerhalb einer Stunde auf 60°C erwärmt und der pH-Wert auf 9,0 fallen gelassen. Nach 1 Stunde bei 60°C und pH 9,0 wird auf 20°C bis 25°C abgekühlt. Die Lösung wird mit 10 Teilen eines handelsüblichen Klärhilfsmittels auf Kieselgur-Basis (z.B. Dicalite®) versetzt. Es wird nach 0,5 Stunden abfiltriert und der Klärrückstand mit 200 Teilen Wasser gewaschen. Nach Zugabe von 475 Teilen Wasser zum Filtrat werden 3400 Teile einer erfindungsgemäßen Flüssigformierung erhalten, die den erfindungsgemäßen Farbstoff, der in Form seiner freien Säure der Formel

CuPc [SO₂NH-(CH₂)₁₀COOH]₄

entspricht, als stabile ca. 9,5 %ige Lösung enthält, (λₘₐₓ: 622; 664 in H₂O bei pH 9,0).

### Beispiel 2

Eine Mischung aus 50 % gebleichtem Kiefern-Sulfatzellstoff und 50 % gebleichtem Birken-Sulfatzellstoff wird bei einer Stoffdichte von 2,5 % auf einen Mahlgrad von 36° SR gemahlen.

Zu 200 g dieser Suspension, enthaltend 5 g Zellstoff, gibt man in einem Becherglas 20 ml einer 0,75 %igen wäßrigen Lösung der erfindungsgemäßen Flüssigformierung aus Beispiel 1 (3 % bezogen auf Zellstoff) und rührt 5 Minuten. Anschließend setzt man 10 ml einer 1%igen Harzleim-Lösung zu, nach einer weiteren Minute 15 ml einer 1%igen Aluminiumsulfat-Lösung, verdünnt mit 800 ml Wasser und rührt weitere 3 Minuten.

Aus dieser Zellstoffsuspension bildet man ein Papierblatt auf einem Handblattbildner, preßt das erhaltene Blatt in einer Handpresse ab und trocknet auf einem Trockenzylinder 10 Minuten bei 100°C unter zweimaligem Wenden.

Die so erhaltene Papierfärbung zeigt ein brillantes Türkisblau in hoher Farbtiefe und weist eine sehr gute Ausblut- und Lichtechtheit auf.

### Beispiel 3

15 Teile der nach Beispiel 1 erhaltenen Flüssigformierung (Farbstoffgehalt ca. 10 %) werden mit einem Gemisch aus 76 Teilen Wasser und 9 Teilen Diethylenglykol verdünnt. Die so erhaltene Aufzeichnungsflüssigkeit liefert mittels eines Hewlett-Packard DeskJet-Druckers (DeskJet ist ein eingetragenes Warenzeichen der Hewlett-Packard Company, USA) auf üblichen Schreibpapieren Drucke in sehr licht- und naßechten Cyan-Tönen.

### Beispiel 4

Ersetzt man im Beispiel 1, Absatz 2, die 161 Teile 11-Aminoundecansäure durch die gleiche Menge 3-Aminoundecansäure und verfährt im übrigen wie im Beispiel 1 angegeben, so erhält man eine Flüssigformierung, die den erfindungsgemäßen Farbstoff, der in Form seiner freien Säure der Formel 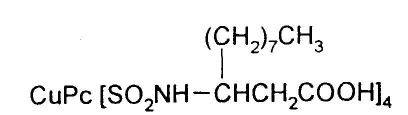 entspricht, als stabile ca. 9%ige Lösung enthält. Auch mit diesem Farbstoff erhält man nach den Verfahren der Beispiele 2 oder 3 echte Färbungen und Drucke mit vergleichbaren Farbtönen.

Einen Farbstoff mit ähnlichen Eigenschaften erhält man, wenn man im Beispiel 1 die 161 Teile Aminoundecansäure durch 170 Teile 12-Aminolaurinsäure (12-Aminododecansäure) ersetzt. Er entspricht in Form seiner freien Säure der Formel

CuPc [SO₂NH-(CH₂)₁₁COOH]₄

(λₘₐₓ: 623; 664 in H₂O bei pH 9,0).

Auch mit diesem Farbstoff erhält man nach den Verfahren der Beispiele 2 oder 3 echte Färbungen und Drucke mit vergleichbaren Farbtönen.

### Beispiel 5

120,0 Teile Kupferphthalocyanin 96%ig (= 115,2 Teile 100%ig) werden innerhalb 1 Stunde unter Rühren in 624,7 Teile Chlorsulfonsäure eingetragen. und innerhalb von 0,5 Stunden auf 119°C erwärmt. Nach 4 Stunden Rühren bei 119°C wird auf 85°C abkühlen lassen und während zwei Stunden bei 85°C bis 88°C tropfenweise mit 137,6 Teilen Thionylchlorid versetzt. Anschließend wird auf 90°C bis 92°C erwärmt und 4 Stunden bei dieser Temperatur gerührt. Nach Abkühlung auf 20°C bis 30°C wird die Reaktionsmischung auf eine Mischung 1000 Teilen Eis und 1000 Teilen Wasser ausgetragen. Durch laufende Zugabe von 1500 Teilen Eis wird die Temperatur bei -2°C bis 0°C gehalten. Es wird abgesaugt und mit 4000 Teilen Eiswasser (3000 Teile Wasser und 1000 Teile Eis) gewaschen.

Der feuchte Nutschkuchen wird in 750 Teile Wasser und 500 Teile Eis eingerührt und sogleich durch Zugabe von 15%iger Natronlauge auf einen pH-Wert von 8,0 gebracht. Es werden weitere 200 Teile Eis zugefügt und dann 141 Teile 11-Aminoundecansäure eingetragen. Durch Zutropfen von 15%iger Natronlauge wird der pH-Wert auf 10,5 eingestellt und während der Umsetzung auf diesem Wert gehalten. Die Temperatur wird innerhalb von 4 Stunden von 0°C auf 20°C ansteigen gelassen. Nach 2 Stunden Rühren bei 20°C bis 25°C wird innerhalb einer Stunde auf 60°C erwärmt und der pH-Wert auf 9,0 fallen gelassen. Nach 1 Stunde bei 60°C und pH 9,0 wird auf 20°C bis 25°C abgekühlt. Die Lösung wird mit 10 Teilen eines handelsüblichen Klärhilfsmittels auf Kieselgur-Basis (z.B. Dicalite®) versetzt. Es wird nach 0,5 Stunden abfiltriert und der Klärrückstand mit 200 Teilen Wasser gewaschen. Nach Zugabe 450 Teilen Wasser zum Filtrat werden 3400 Teile einer erfindungsgemäßen Flüssigformierung erhalten, die den erfindungsgemäßen Farbstoff, der in Form seiner freien Säure der Formel

CuPc [SO₂NH-(CH₂)₁₀COOH]_{3,3}

entspricht, als stabile ca. 10%ige Lösung enthält (λₘₐₓ: 616; 661 in H₂O bei pH 9,0). Auch mit diesem Farbstoff erhält man nach den Verfahren der Beispiele 2 oder 3 echte Färbungen und Drucke mit vergleichbaren Farbtönen.

### Beispiel 7

120,0 Teile Kupferphthalocyanin 96 %ig (= 115,2 Teile 100 %ig) werden innerhalb 1 Stunde unter Rühren in 624,7 Teile Chlorsulfonsäure eingetragen und innerhalb von 1,5 Stunden auf 138°C erwärmt. Nach 8 Stunden Rühren bei 138°C wird auf 20°C abkühlen lassen. Anschließend wird die Reaktionsmischung auf eine Mischung 1000 Teilen Eis und 1000 Teilen Wasser ausgetragen. Durch laufende Zugabe von 1500 Teilen Eis wird die Temperatur bei -2°C bis 0°C gehalten. Es wird abgesaugt und mit 4000 Teilen Eiswasser (3000 Teile Wasser und 1000 Teile Eis), dem 150 ml 2N Salzsäure zugesetzt worden waren, gewaschen.

Der feuchte Nutschkuchen wird in 750 Teilen Wasser und 500 Teilen Eis eingerührt und sogleich durch Zugabe von 15 %iger Natronlauge auf einen pH-Wert von 7,0 gebracht. Dann werden 101 Teile 11-Aminoundecansäure eingetragen. Durch Zutropfen von 15 %iger Natronlauge wird der pH-Wert auf 10,5 eingestellt und während der Umsetzung auf diesem Wert gehalten. Die Temperatur wird innerhalb von 4 Stunden von 0°C auf 20°C ansteigen gelassen. Nach 2 Stunden Rühren bei 20°C bis 25°C wird innerhalb einer Stunde auf 60°C erwärmt und der pH-Wert auf 9,0 fallen gelassen. Nach 1 Stunde bei 60°C und pH 9,0 wird auf 20°C bis 25°C abgekühlt. Die Lösung wird mit 10 Teilen eines handelsüblichen Klärhilfsmittels auf Kieselgur-Basis (z.B. Dicalite®) versetzt. Es wird nach 0,5 Stunden abfiltriert und der Klärrückstand mit 200 Teilen Wasser gewaschen. Es werden 2450 Teile einer erfindungsgemäßen Flüssigformierung erhalten, die den erfindungsgemäßen Farbstoff, der in Form seiner freien Säure der Formel 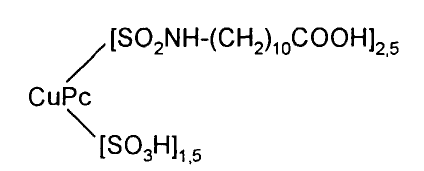 entspricht, als stabile ca. 11 %ige Lösung enthält. Auch mit diesem Farbstoff erhält man nach den Verfahren der Beispiele 2 oder 3 echte Färbungen und Drucke mit vergleichbaren Farbtönen.

### Beispiel 8

Ersetzt man im Beispiel 1, Absatz 2, die 161 Teile 11-Aminoundecansäure durch 80,5 Teile der gleichen Verbindung und arbeitet ansonsten unter gleichen Bedingungen, so erhält man 3150 Teile einer erfindungsgemäßen Flüssigformierung, die den erfindungsgemäßen Farbstoff, der in Form seiner freien Säure der Formel 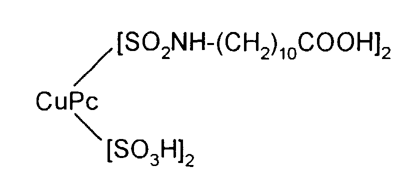 entspricht, als stabile ca. 8 %ige Lösung enthält und ebenfalls nach den Verfahren der Beispiele 2 oder 3 echte Färbungen und Drucke mit vergleichbaren Farbtönen liefert.

### Beispiel 9

3400 Teile der nach Beispiel 1 erhaltenen Flüssigformierung (NaCl-Gehalt ca. 1,4 %) werden auf einer Ultrafiltrations-Laboranlage mit insgesamt 9000 Teilen Wasser diafiltriert und wieder auf ca. 3800 Teile aufkonzentriert. Die erhaltene Flüssigformierung enthält ca. 8,5 % des Farbstoffs nach Beispiel 1 und nun jedoch nur noch 0,05 % Natriumchlorid.

Die so erhaltene, nahezu NaCl-freie Flüssigformierung liefert ebenfalls im INKJET-Druck brillante cyanfarbige Drucke mit ausgezeichneten Licht- und Wasserechtheiten.

## Patentansprüche

1. Kupferphthalocyanin-Farbstoffe, die in Form der freien Säure der Formel 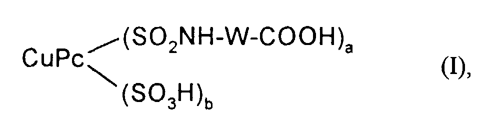 entsprechen, worin
CuPc für einen Kupferphthalocyanin-Rest,
W für verzweigtes oder geradkettiges C₉₋₁₆-Alkylen,
a für 2 bis 4,
b für 0 bis 2 steht, und
die Summe von a und b 3 bis 4 beträgt.

2. Kupferphthalocyanin-Farbstoffe gemäß Anspruch 1,
worin
W für verzweigtes oder geradkettiges C₁₀₋₁₂-Alkylen,
a für 3 bis 4,
b für 0 bis 1 steht.

3. Wäßrige Farbstoff-Formierung, dadurch gekennzeichnet, daß sie 0,1 - 20 Gew.-% eines oder mehrerer Kupferphthalocyanin-Farbstoffe der Formel (I) gemäß Anspruch 1 enthält und einen pH-Wert von 7 bis 13 aufweist.

4. Verfahren zum Färben und Bedrucken von cellulosehaltigem Material, dadurch gekennzeichnet, daß mindestens ein Farbstoff gemäß Ansprüchen 1 oder 2 eingesetzt wird.

5. Verfahren zum Färben von cellulosehaltigem Material, dadurch gekennzeichnet, daß eine Farbstoff-Formierung gemäß Anspruch 3 eingesetzt wird.

6. Verfahren gemäß Anspruch 4 oder 5, dadurch gekennzeichnet, daß es sich bei dem cellulosehaltigen Material um Papier oder Zellstoff handelt.

7. Drucktinte enthaltend mindestens einen Farbstoff gemäß Anspruch 1.

8. Drucktinte gemäß Anspruch 7 enthaltend 0,1 bis 20 Gew.-% Farbstoff, gelöst in Wasser und/oder einem oder mehreren organischen Lösungsmitteln, mit einem pH-Wert zwischen 7 und 13.

9. Verfahren zum Bedrucken von Trägermaterialien mit einer Aufzeichnungsflüssigkeit mittels eines Tintenstrahl-Aufzeichnungssystems, dadurch gekennzeichnet, daß es sich bei der Aufzeichnungsflüssigkeit um eine Drucktinte gemäß Anspruch 7 handelt.

10. Verfahren gemäß Anspruch 9, dadurch gekennzeichnet, daß es sich bei dem Trägermaterial um Papier, Holz, Textilien, Kunststoff oder Metall handelt.

## Claims

1. Copper phthalocyanine dyestuffs which, in the form of the free acid, have the formula 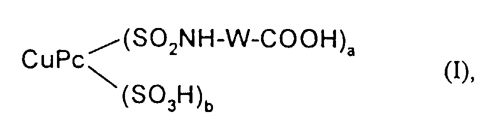 in which
CuPc represents a copper phthalocyanine radical,
w represents branched or straight-chain C₉₋₁₆-alkylene,
a represents 2 to 4,
b represents 0 to 2, and
the sum of a and b is 3 to 4.

2. Copper phthalocyanine dyestuffs according to Claim 1,
in which
W represents branched or straight-chain C₁₀₋₁₂-alkylene,
a represents 3 to 4,
b represents 0 to 1.

3. Aqueous dyestuff finish, characterized in that it contains 0.1-20% by weight of one or more copper phthalocyanine dyestuffs of the formula (I) according to Claim 1 and exhibits a pH of 7 to 13.

4. Process for dyeing and printing cellulose-containing material, characterized in that at least one dyestuff according to Claims 1 or 2 is used.

5. Process for dyeing cellulose-containing material, characterized in that a dyestuff finish according to Claims 3 is used.

6. Process according to Claim 4 or 5, characterized in that the cellulose-containing material is paper or wood pulp.

7. Printing ink containing at least one dyestuff according to Claim 1.

8. Printing ink according to Claim 7 containing 0.1 to 20% by weight of dyestuff, dissolved in water and/or one or more organic solvents and having a pH of between 7 and 13.

9. Process for printing substrates with a recording fluid using an ink-jet recording system, characterized in that the recording fluid is a printing ink according to Claim 7.

10. Process according to Claim 9, characterized in that the substrate is paper, wood, textiles, plastic or metal.

## Revendications

1. Colorants du type phtalocyanine-cuivre qui, sous forme de l'acide libre, correspondent à la formule 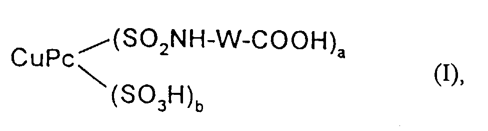 dans laquelle
CuPc est un reste de phtalocyanine-cuivre,
W représente un reste alkylène en C₉-C₁₆ linéaire ou ramifié,
a est un nombre de 2 à 4,
b est un nombre de 0 à 2, et
la somme de a et b est égale à 3 à 4.

2. Colorants du type phtalocyanine-cuivre selon la revendication 1, dans lesquels
W représente un reste alkylène en C₁₀-C₁₂ linéaire ou ramifié,
a est un nombre de 3 à 4,
b est un nombre de 0 à 1.

3. Formulation aqueuse de colorant, caractérisée en ce qu'elle contient 0,1 à 20 % en masse d'un ou plusieurs colorants de type phtalocyanine-cuivre de formule (I) selon la revendication 1 et en ce qu'elle a un pH de 7 à 13.

4. Procédé de teinture et d'impression de matériaux cellulosiques, caractérisé en ce que l'on utilise au moins un colorant selon les revendications 1 ou 2.

5. Procédé de teinture d'un matériau cellulosique, caractérisé en ce que l'on utilise une formulation de colorant selon la revendication 3.

6. Procédé selon la revendication 4 ou 5, caractérisé en ce que le matériau cellulosique est du papier ou de la pâte chimique.

7. Encre d'imprimerie contenant au moins un colorant selon la revendication 1.

8. Encre d'imprimerie selon la revendication 7, contenant 0,1 à 20 % en masse de colorant, en solution dans de l'eau et/ou un ou plusieurs solvants organiques, et ayant un pH compris entre 7 et 13.

9. Procédé d'impression de supports avec un liquide d'enregistrement au moyen d'un système d'enregistrement à jet d'encre, caractérisé en ce que le liquide d'enregistrement est une encre d'imprimerie selon la revendication 7.

10. Procédé selon la revendication 9, caractérisé en ce que le support est constitué par du papier, du bois, une matière textile, une matière plastique ou un métal.
